# EUROPEAN PATENT APPLICATION

(11) **EP 1 961 997 A2**
(43) Date of publication of application: **27.08.2008**
(21) Application number: 08151570.2
(22) Date of filing: 18.02.2008
(51) Int. Cl.: F16H 49/00, B62D 3/02

(54) **Strain wave reduction gear and variable transmission ratio steering apparatus**

(30) Priority: 23.02.2007 JP 2007044058
(71) Applicant: JTEKT CORPORATION, Chuo-ku Osaka-shi Osaka 542-8502 (JP)
(72) Inventor: Yamakawa, Tomonari, Osaka-shi, Osaka 542-8502 (JP)
(74) Representative: TBK-Patent

(57) **Abstract**

A strain wave reduction gear and a variable transmission ratio steering apparatus move a flexible gear (33) and a rigid gear (31) differentially, even if the flexible gear is in a fractured state. According to the strain wave reduction gear, the flexspline mates with the inner side of the elliptical hole of the rigid cam via the flexible bearing; therefore, the flexspline maintains an elliptical shape that is similar to the elliptical hole and maintains the meshed state-even if the flexspline fractures. Therefore, when the rigid cam rotates, the mesh positions of the flexspline and the first and second circular splines can be shifted in a circumferential direction. Namely, even in a state wherein the flexspline is fractured, the first circular spline and the second circular spline can be moved differentially by the difference in their tooth counts.
The tooth count of the external teeth (32A) is one or two fewer than that of the external teeth (31A). The tooth count of the internal teeth (33A) of the flexspline (33) is the same as that of the external teeth (32A).

## Description

### Field of the Invention

The present invention relates to a strain wave reduction gear that is mounted between one pair of relative rotary members and that receives input rotation from a rotary drive source and converts it into reduced-speed relative rotation between the relative rotary members, and to a variable transmission ratio steering apparatus that is equipped with the strain wave reduction gear.

### Background of the Invention

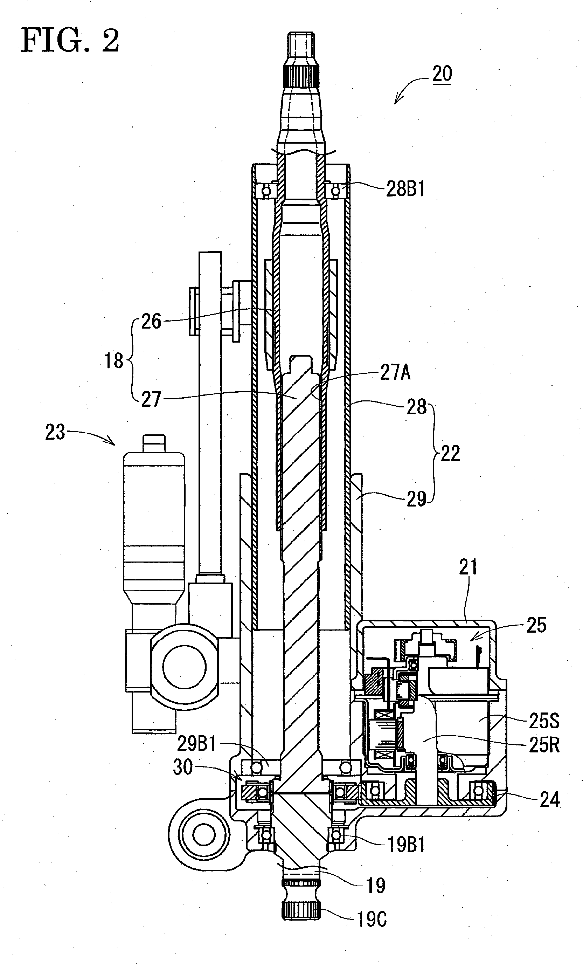

Conventional strain wave reduction gears of this kind are known (for example, refer to Japanese Examined Patent Publication No. H03-27781 (page 3, left column, line 27 through page 3, right column, line 17; and FIG. 2)) that are equipped with a rigid internal gear, a flexible external gear that is disposed on the inner side thereof and has a tooth count that is different therefrom, and a wave generator that meshes with the inner side of the flexible external gear and deforms the flexible external gear into an elliptical shape; herein, the rotation of the wave generator shifts the positions at which the flexible external gear meshes with the rigid internal gear in a circumferential direction, thereby causing the flexible external gear and the rigid internal gear to move differentially.

Incidentally, with a conventional strain wave reduction gear as discussed above, if the flexible external gear fractures, then it can no longer be deformed in accordance with the rotation of the wave generator, which in turn can no longer shift the positions at which the flexible external gear and the rigid internal gear mesh in a circumferential direction. Namely, there is a problem in that it is no longer possible to move the flexible external gear and the rigid internal gear differentially.

The present invention considers the abovementioned circumstances, and relates to a strain wave reduction gear and a variable transmission ratio steering apparatus that can move a flexible gear and a rigid gear differentially, even if the flexible gear is in a fractured state.

### Summary of the Invention

A strain wave reduction gear (30) according to an aspect of the invention, which was conceived in order to achieve the abovementioned object, is mounted between one pair of relative rotary members (19, 26), receives input rotation from a rotary drive source (25) and converts it into reduced-speed relative rotation between the pair of relative rotary members (19, 26), and is equipped with: a rigid external gear (31); a flexible internal gear (100) that surrounds an outer side of the rigid external gear (31) and has internal teeth that have a tooth count that is different than that of external teeth of the rigid external gear (31); a flexible bearing (34) that further mates with the outer side thereof; a rigid cam (35) that has an elliptical hole (38), the inner side of which mates with the flexible bearing (34), at its center part and that deforms the flexible bearing (34) and the flexible internal gear (100) into elliptical shapes and meshes part of the flexible internal gear (100) with the rigid external gear (31) in the minor axial directions of the elliptical shapes; an external gear coupling part (27A) that is provided to the rigid external gear (31) and that is capable of coupling with one of the relative rotary members (26); an internal gear coupling part (100B) that is provided to the flexible internal gear (100) and that is capable of coupling with the other relative rotary member (19); and an input coupling part (35B) that is provided to the rigid cam (35) and that is capable of coupling with the rotary drive source (25); wherein, the rotation of the rigid cam (35) can shift portions at which the flexible internal gear (100) and the rigid external gear (31) mesh in a circumferential direction and can differentially move the flexible internal gear (100) and the rigid external gear (31).

Another aspect of the invention is a strain wave reduction gear (30) according to the aspect of the invention above, wherein the internal gear coupling part (100B) is configured by: configuring the flexible internal gear (100) by providing a cylindrically shaped flexible sleeve (100A) and providing a plurality of internal teeth (100C) to an inner circumferential surface of the flexible sleeve (100A) on one end side; and providing a flange wall (100F) or a bottom wall (100B) to the other end side of the flexible sleeve (100A) and forming a mounting hole (101) therethrough.

A strain wave reduction gear (30) according to a further aspect of the invention is mounted between one pair of relative rotary members (15C, 26), receives input rotation from a rotary drive source (25) and converts it into reduced-speed relative rotation between the pair of relative rotary members (15C, 26), and is equipped with: a rigid external gear (31); a rigid sub external gear (32) that is disposed coaxially and adjacent to the rigid external gear (31) and that has a tooth count that is different from that of the rigid external gear (31); a flexible internal gear (33) that surrounds an outer side of the rigid external gear (31) and the rigid sub external gear (32), and has internal teeth (33A) that have a tooth count that is different from that of external teeth (31A) of the rigid external gear (31); a flexible bearing (34) that further mates with the outer side thereof; a rigid cam (35) that has an elliptical hole (38), the inner side of which mates with the flexible bearing (34), at its center part and that deforms the flexible bearing (34) and the flexible internal gear (33) into elliptical shapes and meshes part of the flexible internal gear (33) with the rigid external gear (31) in the minor axial directions of the elliptical shapes; an external gear coupling part (27A) that is provided to the rigid external gear (31) and that is capable of coupling with one of the relative rotary members (26); a sub external gear coupling part (19C) that is provided to the rigid sub external gear (32) and that is capable of coupling with the other relative rotary member (15C); and an input coupling part (35B) that is provided to the rigid cam (35) and that is capable of coupling with the rotary drive source (25); wherein, the rotation of the rigid cam (35) can shift portions at which the flexible internal gear (33) meshes with the rigid external gear (31) and the rigid sub external gear (32) in a circumferential direction and can differentially move the rigid external gear (31) and the rigid sub external gear (32).

A further aspect of the invention is a strain wave reduction gear (30) according to any one aspect above, wherein an outer edge of the rigid cam (35) has a circular shape, and a plurality of external teeth (35B), which serve as the input coupling part (35B), are formed on the outer circumferential surface of the rigid cam (35); and the rigid cam (35) is capable of coupling with the rotary drive source (25) by gearing via a drive force transmitting gear (24), which rotates around a rotary shaft that is offset from the rotary shaft of the rigid cam (35).

Herein, "offset" means "displaced." Furthermore, the rotary shaft of the drive force transmitting gear that is offset from the rotary shaft of the rigid cam may be parallel to the rotary shaft of the rigid cam or they may cross one another.

A variable transmission ratio steering apparatus (20) according to a further aspect of the invention is equipped with: a rack and pinion mechanism (12, 15) that is provided by meshing a pinion (15) with a rack (12) between one pair of turning wheels (11) of a vehicle (10); a strain wave reduction gear (30) according to the aspect further above; a rigid cam (35) according to the aspect immediately above; and a motor (25), which serves as a rotary drive source (25); wherein, one of the rigid external gear (31) and the rigid sub external gear (32) is coupled to a steering wheel (16) of the vehicle (10) and the other of the rigid external gear (31) and the rigid sub external gear (32) is coupled to the pinion (15); and the transmission ratio of the steering angle from the steering wheel (16) to the pinion (15) can be varied in accordance with the vehicle speed.

According to a strain wave reduction gear of an aspect of the invention, a flexible internal gear and a flexible bearing deform into elliptical shapes that are similar to an elliptical hole that is formed in a center part of a rigid cam. Accordingly, if the rigid cam rotates relative to the flexible internal gear, then the major axis position of the elliptical shape of the flexible internal gear rotates and, attendant therewith, the mesh positions of the flexible internal gear and a rigid external gear shift in a circumferential direction. Thereby, the flexible internal gear and the rigid external gear move differentially by the difference in their tooth counts. Namely, the rigid cam receives the input rotation from the rotary drive source and converts it into reduced-speed relative rotation between one of the relative rotary members, which is coupled to the rigid external gear, and the other of the relative rotary members, which is coupled to the flexible internal gear.

Herein, because the flexible internal gear, which is provided to the strain wave reduction gear of this aspect of the present invention, mates with the inner side of the elliptical hole of the rigid cam via the flexible bearing, it maintains an elliptical shape that is similar to the elliptical hole, and the flexible internal gear and the rigid external gear maintain the meshed state-even in the event that the flexible internal gear fractures. Therefore, when the rigid cam rotates, the mesh positions of the flexible internal gear and the rigid external gear can be shifted in a circumferential direction. Namely, even in a state wherein the flexible internal gear is fractured, the flexible internal gear and the rigid external gear can be moved differentially by the difference in their tooth counts, and the input rotation received from the rotary drive source can be converted into reduced-speed relative rotation between the pair of relative rotary members.

As explained further above, if a flexible internal gear is configured by providing a plurality of internal teeth to an inner circumferential surface of a cylindrically shaped flexible sleeve and a mounting hole is formed through a flange wall or a bottom wall that is provided to the flexible sleeve, then a bolt or a pin can be passed through that mounting hole and thereby the flexible internal gear can be affixed to the relative rotary member easily.

According to a strain wave reduction gear of a further aspect of the invention, a flexible internal gear and a flexible bearing deform into elliptical shapes that are similar to an elliptical hole that is formed in a center part of a rigid cam. Accordingly, if the rigid cam rotates relative to the flexible internal gear, then the major axis position of the elliptical shape of the flexible internal gear rotates and, attendant therewith, the positions at which the flexible internal gear meshes with a rigid external gear and a rigid sub external gear shift in a circumferential direction. Thereby, the rigid external gear and the rigid sub external gear move differentially by the difference in their tooth counts. Namely, the rigid cam receives the input rotation from the rotary drive source and converts it into reduced-speed relative rotation between one of the relative rotary members, which is coupled to the rigid external gear, and the other of the relative rotary members, which is coupled to the rigid sub external gear.

Herein, because the flexible internal gear, which is provided to the strain wave reduction gear of this aspect of the present invention, mates with the inner side of the elliptical hole of the rigid cam via the flexible bearing, it maintains an elliptical shape that is similar to the elliptical hole, and the flexible internal gear maintains the meshed state with the rigid external gear and the rigid sub external gear-even in the event that the flexible internal gear fractures. Therefore, when the rigid cam rotates, the positions at which the flexible internal gear meshes with the rigid external gear and the rigid sub external gear can be shifted in a circumferential direction. Namely, even in a state wherein the flexible internal gear is fractured, the rigid external gear and the rigid sub external gear can be moved differentially by the difference in their tooth counts, and the input rotation received from the rotary drive source can be converted into reduced-speed relative rotation between the pair of relative rotary members.

According to the configuration of a further aspect of the invention, an output rotation of the rotary drive source is transmitted to the rigid cam via a drive force transmitting gear at a position that is offset (displaced) from the rotary shaft of the rigid cam. Here, in a case wherein the rotary drive source is disposed at a position that is offset from the rotary shaft of the rigid cam, the conventional configuration wherein a rigid cam is provided at a center part of the strain wave reduction gear has problems wherein the rotary drive source and the rigid cam become relatively greatly spaced apart, and the transmission structure for transmitting the rotation from the rotary drive source to the rigid cam becomes complicated or enlarged. In contrast, with the configuration of this aspect of the invention, the rigid cam is disposed at the outermost part of the strain wave reduction gear mechanism and the external teeth are provided to the outer circumferential surface thereof, which makes it possible to bring the rigid cam and the rotary drive source proximate to one each other and to couple them with a gear; thereby, the gear coupling structure of the rotary drive source and the rigid cam can be made simpler and more compact than the conventional structure.

A variable transmission ratio steering apparatus of a further aspect of the invention is equipped with the strain wave reduction gear according to the present invention described above; therefore, even in the event that the flexible internal gear of the strain wave reduction gear fractures, the transmission ratio of the steering angle from the steering wheel to the pinion of the rack and pinion mechanism can be varied in accordance with the vehicle speed.

### Brief Description of the Drawings

FIG. 1 is a conceptual diagram of a vehicle according to an embodiment of the present invention.
FIG. 2 is a side cross sectional view of a variable transmission ratio steering apparatus.
FIG. 3 is a partially enlarged side cross sectional view of a variable transmission ratio steering apparatus.
FIG. 4 is a partially enlarged side cross sectional view of a strain wave reduction gear.
FIG. 5 is a plan view of a strain wave reduction gear.
FIG. 6 is a partially enlarged cross sectional view of a variable transmission ratio steering apparatus according to another embodiment.
FIG. 7 is a partially enlarged side cross sectional view of a strain wave reduction gear.
FIG. 8 is a partially enlarged side cross sectional view of a strain wave reduction gear according to a modified example.

### Detailed Description of the Invention

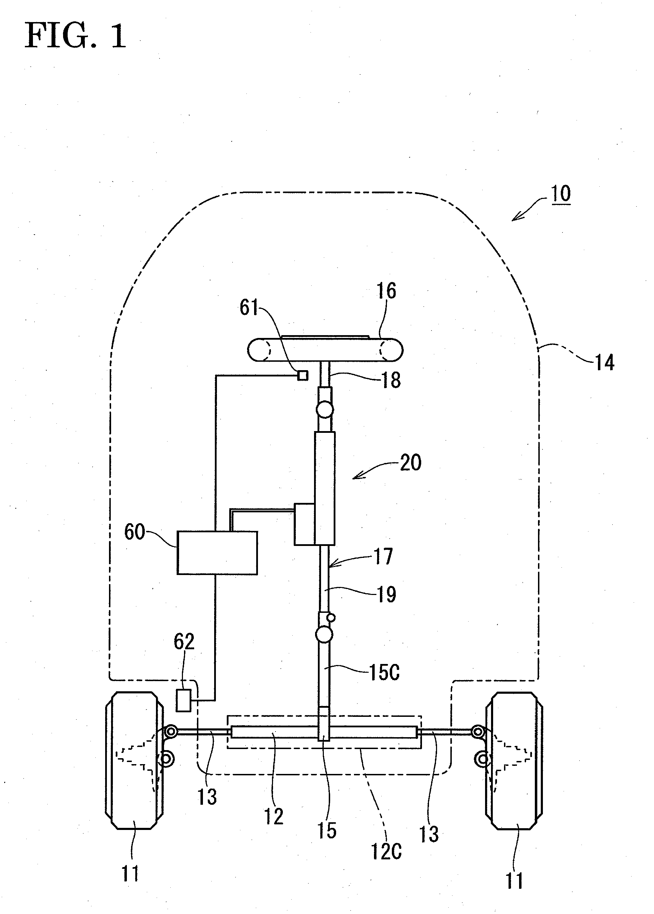

The following explains an embodiment according to the present invention, referencing FIG. 1 to FIG. 5. As shown in FIG. 1, a rack 12 is laid across one pair of front wheels 11, 11 (which correspond to "turning wheels" according to the present invention) of a vehicle 10, and the end parts of the rack 12 are coupled to the front wheels 11, 11 via tie rods 13, 13. In addition, a rack case 12C is fixed to a vehicle body 14; furthermore, the rack 12 is housed in the rack case 12C so that it is directly drivable, and meshes with a pinion 15 that is provided to an intermediate part of the rack case 12C. Furthermore, the rack 12 and the pinion 15 constitute a rack and pinion mechanism.

An intermediate shaft 15C is coupled to an upper end part of the pinion 15, and a steering shaft 17 is coupled between the intermediate shaft 15C and a steering wheel 16. As shown in FIG. 2, the steering shaft 17 is made of a first steering shaft 18 on the steering wheel 16 side, and a second steering shaft 19 on the pinion 15 side. Furthermore, a variable transmission ratio steering apparatus 20 according to the present invention is configured by using a strain wave reduction gear mechanism 30 to couple the first and second steering shafts 18, 19 in a state wherein the end parts thereof are mated inside a shaft housing 22, and coupling a motor 25 to the strain wave reduction gear mechanism 30 by gearing.

In detail, the shaft housing 22 has a tubular shape that extends in the vertical directions and can be divided into an upper sleeve 28 and a lower sleeve 29 at an intermediate portion in the shaft directions. A lower end part of the upper sleeve 28 is mated to the lower sleeve 29 so that it is directly drivable. Furthermore, a direct acting drive source 23, which is provided to a side surface of the shaft housing 22, can directly drive the upper sleeve 28 with respect to the lower sleeve 29 and can telescopically drive the shaft housing 22.

The first steering shaft 18 has a telescopic structure. Namely, the first steering shaft 18 is divided into an upper shaft 26 and a lower shaft 27 at an intermediate portion in the shaft directions, and the upper shaft 26 and the lower shaft 27 are coupled, for example, by a spline so that they are directly drivable. In addition, with the exception of its upper end part, the first steering shaft 18 is housed inside the shaft housing 22, and its lower end part is disposed in the shaft housing 22 at a position near the lower end thereof. Furthermore, a bearing 28B 1 inside the upper sleeve 28 rotatably and pivotally supports the first steering shaft 18 at a position near its upper end, and a bearing 29B1 inside the lower sleeve 29 rotatably and pivotally supports the first steering shaft 18 at a position near its lower end. Thereby, the first steering shaft 18 is rotatably and pivotally supported on the inner side of the shaft housing 22 and extends and contracts together with the shaft housing 22.

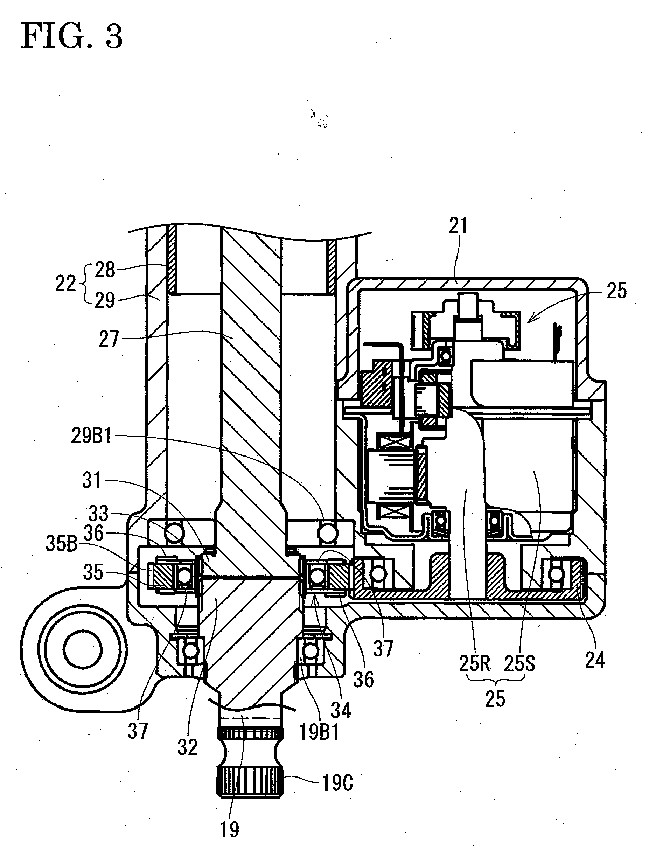

As shown in FIG. 1, only the upper end part of the second steering shaft 19 is housed in the shaft housing 22, and the remaining portion is exposed and extends downward from the shaft housing 22. In addition, as shown in FIG. 3, a bearing 19B inside the shaft housing 22 rotatably and pivotally supports the upper end part of the second steering shaft 19. Furthermore, an upper end surface of the second steering shaft 19 and a lower end surface of the first steering shaft 18 are mated inside the shaft housing 22 in a slightly spaced apart state.

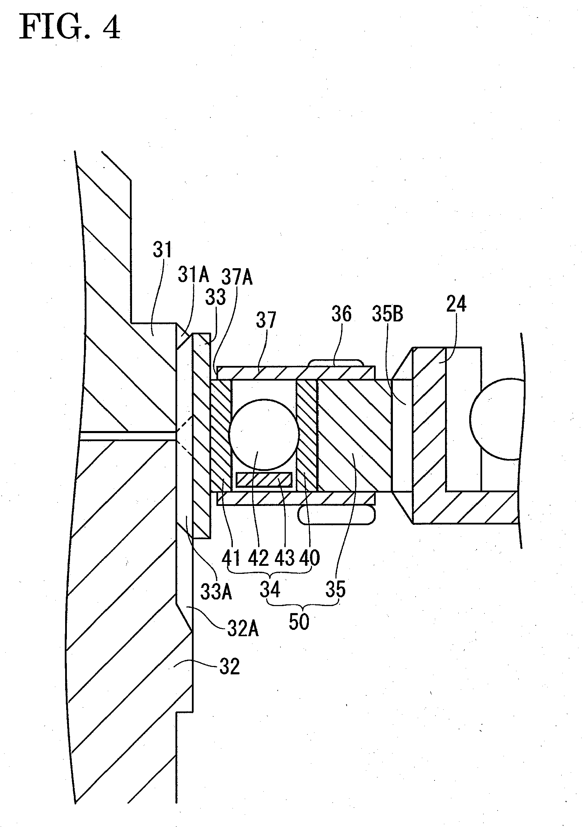

The outer diameters of the mated end parts of the first and second steering shafts 18, 19 are substantially the same, and pluralities of external teeth 31A, 32A are formed in the outer circumferential surfaces thereof, respectively, thus constituting one part of the strain wave reduction gear mechanism 30 according to the present invention. Namely, a first circular spline 31, which corresponds to a "rigid external gear" of the present invention, of the strain wave reduction gear mechanism 30 constitutes one part of the lower shaft 27 of the first steering shaft 18, and a second circular spline 32, which corresponds to a "rigid sub external gear" of the present invention, constitutes one part of the second steering shaft 19. Furthermore, the outer sides of the first and second circular splines 31, 32 are enclosed by a flexspline 33, which is shown in FIG. 4.

The flexspline 33, which corresponds to a "flexible internal gear" of the present invention, is formed in a cylindrical shape from a material that is more flexible than that of both the circular splines 31, 32 and extends so that it straddles both of the first and second circular splines 31, 32. Furthermore, a plurality of internal teeth 33A, which are capable of meshing with the external teeth 31A, 32A of the first and second circular splines 31, 32, are formed on an inner circumferential surface of the flexspline 33. Furthermore, the tooth count of the external teeth 32A that are formed on the outer circumferential surface of the second circular spline 32 is one or two fewer than that of the external teeth 31A that are formed on the outer circumferential surface of the first circular spline 31. In addition, the tooth count of the internal teeth 33A of the flexspline 33 is the same as that of the external teeth 32A of the second circular spline 32. Furthermore, the root diameters and the outside diameters of the first and second circular splines 31, 32 are substantially the same.

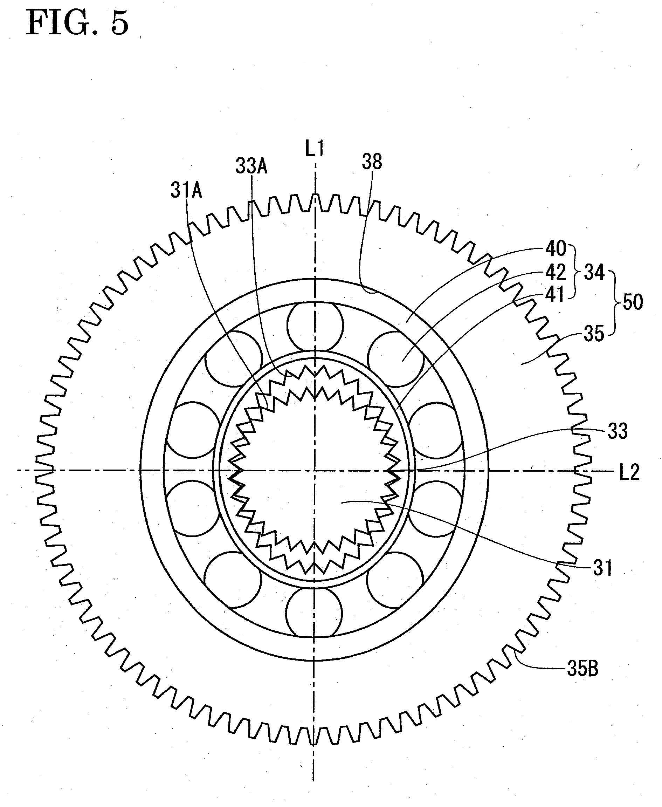

In addition, as shown in FIG. 4, half of the internal teeth 33A of the flexspline 33 in the tooth width direction oppose the external teeth 31A of the first circular spline 31, and the remaining half opposes the external teeth 32A of the second circular spline 32. Furthermore, as shown in FIG. 5, the flexspline 33 is deformed into an elliptical shape by a wave generator 50, which is provided on the outer side thereof and is discussed next; furthermore, at two locations along the minor axis of that ellipse, the internal teeth 33A of the flexspline 33 and the external teeth 31A, 32A of the first and second circular splines 31, 32 mesh. Furthermore, in FIG. 5, L1 is the major axis of the ellipse and L2 is the minor axis of the ellipse.

In the wave generator 50, a flexible bearing 34 (which corresponds to a "flexible bearing" of the present invention) mates with an inner side of a rigid cam 35. At its center part, the rigid cam 35 has a nearly circular elliptical hole 38 with which the flexible bearing 34 mates.

The flexible bearing 34 has an outer ring 40 and an inner ring 41, which are made of a material that is more flexible than that of the rigid cam 35. A plurality of bearing balls 42 is rollably held between the outer ring 40 and the inner ring 41 and is housed by a retainer 43 (refer to FIG. 4) so that the bearing balls 42 are held in a state wherein they are evenly disposed in the circumferential directions. In addition, in the present embodiment, as shown in FIG. 4, the widths (axial lengths) of the inner ring 41 and the outer ring 40 are substantially the same as the width of the rigid cam 35, and the flexspline 33 is wider than and extends beyond both sides of the outer ring 40.

The inner ring 41 mates with the outer circumferential surface of the flexspline 33, while the outer ring 40 mates with the inner circumferential surface of the elliptical hole 38, which is provided in the rigid cam 35. Thereby, the inner ring 41, the outer ring 40, and the flexspline 33 are deformed into elliptical shapes that are substantially similar to the elliptical hole 38 of the rigid cam 35.

Furthermore, as shown in FIG. 4, side plates 37, 37 are provided at the side parts (the vertical end parts in FIG. 4) of the flexible bearing 34. Each of the side plates 37, 37 is a discoidal body that has an elliptical opening 37A at the center, and covers substantially the entire corresponding side surface of the flexible bearing 34. Furthermore, the side plates 37, 37 overlap the rigid cam 35; in addition, both of the side plates 37, 37 and the rigid cam 35 are brought to a state wherein the major axes of their elliptical shapes are made to coincide, after which they are fixed with a rivet 36.

As shown in FIG. 5, the outer edge of the rigid cam 35 is of a circular shape that is concentric with the elliptical hole 38, and a plurality of external teeth 35B (which correspond to the "input coupling part" of the present invention) are formed on the outer circumferential surface of the rigid cam 35. Furthermore, as shown in FIG. 3, a motor output gear 24 (which corresponds to a "drive force transmitting gear" according to the present invention), which is attached to the motor 25, meshes with the external teeth 35B of the rigid cam 35. Specifically, a motor housing case 21 is attached to the side of the lower end part of the shaft housing 22, and the motor 25 is housed therein. A stator 25S of the motor 25 is fixed to the motor housing case 21, and a rotor 25R projects downward from the lower end surface of the stator 25S. Furthermore, the motor output gear 24, which is a spur gear, is integrally and rotatably fixed to the rotor 25R, and part of the motor output gear 24 is exposed to the interior of the shaft housing 22 and meshes with the external teeth 35B of the rigid cam 35.

Furthermore, in the present embodiment, the "rigid external gear" of the present invention constitutes part of the lower shaft 27 shown in FIG. 2 as discussed above, and a coupling part 27A of the lower shaft 27 that couples with the upper shaft 26 corresponds to an "external gear coupling part" according to the present invention. In addition, the "rigid sub external gear" of the present invention constitutes part of the second steering shaft 19 shown in FIG. 2, and a coupling part 19C of the second steering shaft 19 that couples with the intermediate shaft 15C (refer to FIG. 1) corresponds to a "sub external gear coupling part" according to the present invention. Furthermore, the upper shaft 26 and the intermediate shaft 15C correspond to the "one pair of relative rotary members" according to the present invention.

The above explains the configuration of the strain wave reduction gear mechanism 30 and the variable transmission ratio steering apparatus 20 according to the present embodiment. The following explains the operation of the present embodiment.

If the motor 25 rotatably drives the rigid cam 35, then the major axis L1 of the elliptical shapes of the outer ring 40 and the flexspline 33 moves in a circumferential direction and, attendant therewith, the mesh positions of the flexspline 33 and the circular splines 31, 32 shift in a circumferential direction. Thereby, when the rigid cam 35 rotates by one rotation, the second circular spline 32 moves with respect to the first circular spline 31 by just the difference in their tooth counts, and thereby the second steering shaft 19 rotates relative to the first steering shaft 18.

The relative rotational angle varies with the rotational angle of the motor 25, which is driven and controlled by a steering control apparatus 60 (refer to FIG. 1). Specifically, as shown in FIG. 1, the steering control apparatus 60 captures the steering angle of the steering wheel 16, which is detected by a steering angle sensor 61, and the vehicle speed, which is detected by a vehicle speed sensor 62, and determines the transmission ratio by which the variable transmission ratio steering apparatus 20 transmits from the first steering shaft 18 to the second steering shaft 19. Furthermore, based on the determined transmission ratio and the input steering angle, which is input from the first steering shaft 18 by the variable transmission ratio steering apparatus 20, the steering control apparatus 60 calculates an output steering angle that the variable transmission ratio steering apparatus 20 outputs to the second steering shaft 19 and drives and controls the motor 25 in accordance with that output steering angle.

Incidentally, because the flexspline 33 mates with the inner side of the elliptical hole 38 of the rigid cam 35 via the flexible bearing 34, the flexspline 33 maintains an elliptical shape that is similar to the elliptical hole 38 and maintains the meshed state-even in the event that the flexspline 33 fractures due to, for example, metal fatigue. Therefore, when the rigid cam 35 rotates, the mesh positions of the flexspline 33 and the first and second circular splines 31, 32 can be shifted in a circumferential direction.

Namely, according to the configuration of the present embodiment, even in a state wherein the flexspline 33 is fractured, the first circular spline 31 and the second circular spline 32 can be moved differentially by the difference in their tooth counts, and the input rotation received from the motor 25 can be converted into reduced-speed relative rotation between the first steering shaft 18 and the second steering shaft 19. Thereby, if the flexspline 33 fractures, it is possible to prevent that fracture from affecting the operation of the steering wheel.

Incidentally, in a case wherein the central axis of the motor 25 is disposed so that it is laterally offset (displaced) in a parallel fashion from the central axis of the strain wave reduction gear mechanism 30, and the strain wave reduction gear mechanism 30 and the motor 25 are coupled via a gear as in the present embodiment, the conventional configuration wherein a rigid cam is provided at a center part of the strain wave reduction gear has problems wherein the motor and the rigid cam become relatively greatly spaced apart, and the transmission structure for transmitting the rotation of the motor to the rigid cam becomes complicated or enlarged. In contrast, with the configuration of the present embodiment, the rigid cam 35 is disposed at the outermost part of the strain wave reduction gear mechanism 30 and the external teeth 35B are provided at the outer circumferential surface thereof, which makes it possible to bring the rigid cam 35 and the motor 25 proximate to each other and to couple them with a gear. Thereby, the gear coupling structure of the motor 25 and the rigid cam 35 can be made simpler and more compact than the conventional structure.

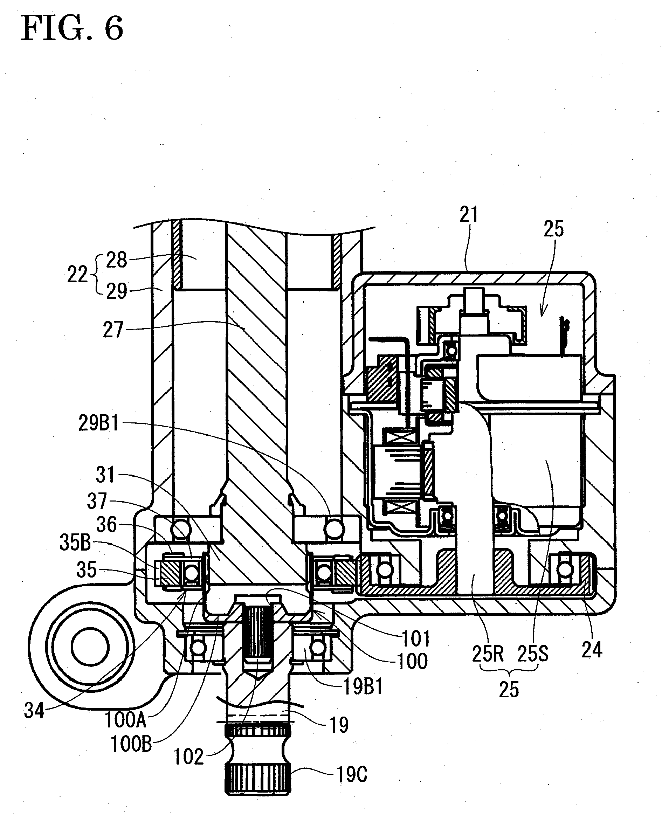

As shown in FIG. 6, the strain wave reduction gear mechanism 30 of another embodiment excludes the second circular spline 32; instead, a structure is adopted wherein a flexspline 100 has a cylindrical shape with a bottom, i.e., a bottom wall 100B, on one end and the second steering shaft 19 is coupled to that bottom wall 100B. Furthermore, using the rotary drive of the motor 25 to move the flexspline 100 and the first circular spline 31 differentially causes the first steering shaft 18 and the second steering shaft 19 to rotate relative to each other.

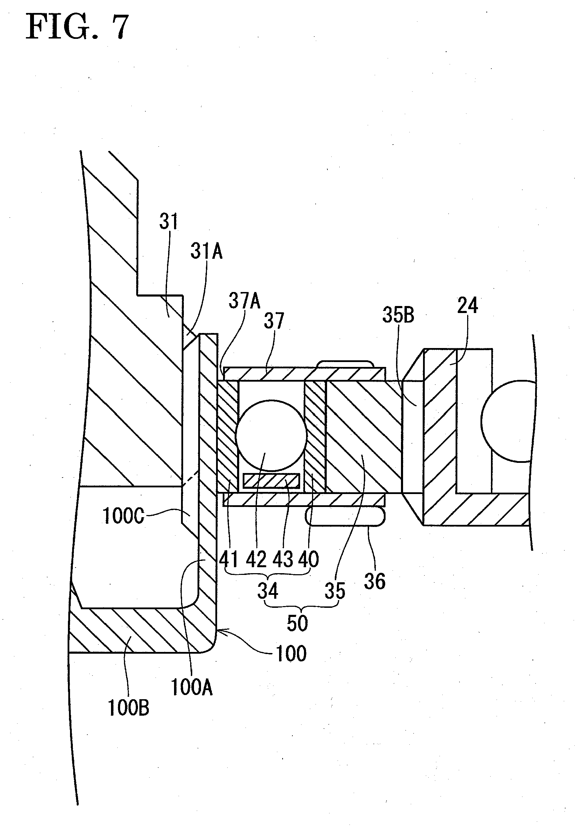

Consequently, as shown in FIG. 6, the flexspline 100 has a cup shaped structure wherein one end is open and the other end is closed. In detail, as shown in FIG. 7, the end part of a comparatively thin cylindrically shaped flexible sleeve 100A on the steering wheel 16 side is open, and an inner circumferential surface near the open end thereof is provided with a plurality of internal teeth 100C with a tooth count that is different from that of the first circular spline 31. In addition, a mounting hole 101 is formed through the bottom wall 100B of the flexible sleeve 100A. Furthermore, the second steering shaft 19 is fixed to the flexspline 100 by an anchor pin 102, which passes through the mounting hole 101. Other aspects of the configuration of the present embodiment are the same as those of the embodiment above, and therefore constituent parts of the present embodiment that are the same as those in the embodiment above are assigned the same symbols and any redundant explanation is omitted.

The following explains the operation and effects of the strain wave reduction gear mechanism 30 and the variable transmission ratio steering apparatus 20 of the present embodiment. If the motor 25 rotatably drives the rigid cam 35, then the major axis (L1) of the elliptical shapes of the outer ring 40 and the flexspline 100 moves in a circumferential direction and, attendant therewith, the mesh positions of the flexspline 100 and the circular spline 31 shift in a circumferential direction. Thereby, the flexspline 100 and the first circular spline 31 move differentially. Furthermore, the second steering shaft 19 rotates relative to the first steering shaft 18.

In addition, according to the configuration of the present embodiment, even in a state wherein the flexspline 100 is fractured, the flexspline 100 and the first circular spline 31 can be moved differentially by the difference in their tooth counts, and the input rotation received from the motor 25 can be converted into reduced-speed relative rotation between the first and second steering shafts 18, 19, the same as in the embodiment above. In addition, the gear coupling structure of the motor 25 and the rigid cam 35 can be made simpler and more compact than the conventional structure.

The above explains embodiments of the present invention based on the drawings, but the specific constitution is not limited to these embodiments, and it is understood that variations and modifications explained below may be effected without departing from the spirit and scope of the invention.

In the abovementioned embodiments, the rigid cam 35 and the motor output gear 24 are spur gears, but they may be bevel gears or helical gears. In addition, if a worm gear is used as the motor output gear 24 and the outer edge part of the rigid cam 35 has a worm wheel shape so that it is capable of meshing with the worm gear, then it is possible to dispose the motor 25 at a position that is offset (displaced) from the rotary shaft of the rigid cam 35 and to dispose the rotary shaft (the rotor 25R) of the motor 25 and the rotary shaft of the rigid cam 35 so that they cross each other perpendicularly.

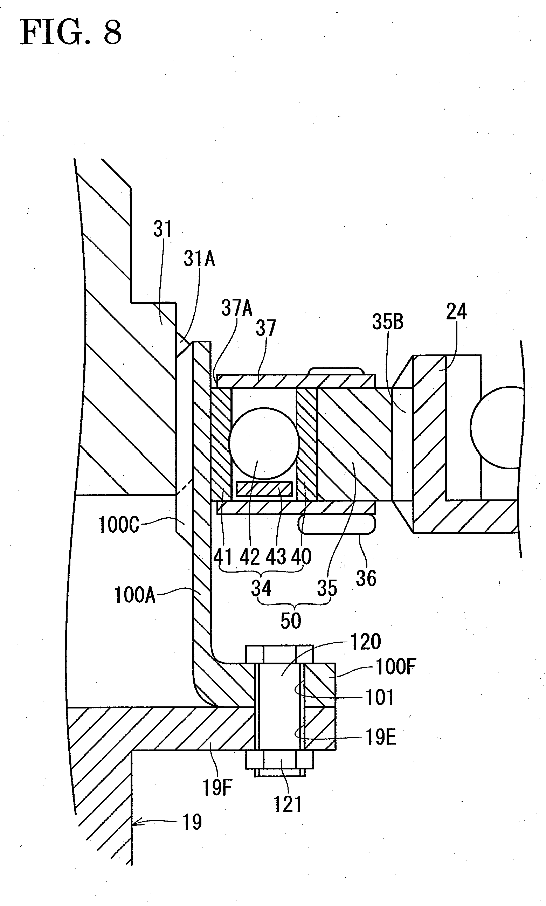

In one of the abovementioned embodiments, the flexspline 100 has a cup shaped structure wherein one end of the flexible sleeve 100A is closed by the bottom wall 100B; however, as shown in FIG. 8, an "internal gear coupling part" according to the present invention may be configured by providing a flange wall 100F that projects to the outer side of the flexible sleeve 100A from its end part on the pinion 15 side, and forming one mounting hole 101 or a plurality thereof in the flange wall 100F. In this case, a flange wall 19F and a mounting hole 19E should be provided in advance to the upper end part of the second steering shaft 19, and a bolt 120 that passes through both bolt through holes 101, 19E should be tightened by a nut 121 in a state wherein the flange walls 100F, 19F mutually overlap, thereby integrally and rotatably coupling the flexspline 100 and the second steering shaft 19.

In the abovementioned embodiments, the outer circumferential surface of the inner ring 41 and the inner circumferential surface of the outer ring 40 serve as the rolling surfaces of the bearing balls 42, but the outer circumferential surfaces of the flexsplines 33, 100 and the inner circumferential surface of the elliptical hole 38 of the rigid cam 35 may serve as the rolling surfaces of the bearing balls 42 instead.

The strain wave reduction gear mechanism 30 may be provided at any region of a torque transmitting system that transmits steering torque from the steering wheel 16 to the pinion 15. Namely, as in the abovementioned embodiments, it may be provided somewhere (between the first and second steering shafts 18, 19) along the steering shaft 17; alternatively, the intermediate shaft 15C may be configured with an upper shaft and a lower shaft that are capable of relative rotation and the strain wave reduction gear mechanism 30 may be provided therebetween. In addition, the intermediate shaft 15C and the pinion 15 may be made so that they are capable of relative rotation and the strain wave reduction gear mechanism 30 of the present invention may be provided therebetween. An effect equivalent to that of the abovementioned embodiments is obtained with any of these configurations.

A strain wave reduction gear and a variable transmission ratio steering apparatus move a flexible gear and a rigid gear differentially, even if the flexible gear is in a fractured state. According to the strain wave reduction gear, the flexspline mates with the inner side of the elliptical hole of the rigid cam via the flexible, bearing; therefore, the flexspline maintains an elliptical shape that is similar to the elliptical hole and maintains the meshed state-even if the flexspline fractures. Therefore, when the rigid cam rotates, the mesh positions of the flexspline and the first and second circular splines can be shifted in a circumferential direction. Namely, even in a state wherein the flexspline is fractured, the first circular spline and the second circular spline can be moved differentially by the difference in their tooth counts. ,

## Claims

1. A strain wave reduction gear that is mounted between one pair of relative rotary members and that receives input rotation from a rotary drive source and converts it into reduced-speed relative rotation between the pair of relative rotary members, the strain wave reduction gear comprising:
a rigid external gear;
a flexible internal gear that surrounds an outer side of the rigid external gear and comprises internal teeth that have a tooth count that is different from that of external teeth of the rigid external gear;
a flexible bearing that mates with an outer side of the flexible internal gear;
a rigid cam that has at its center part an elliptical hole, an inner side of which mates with the flexible bearing, and that deforms the flexible bearing and the flexible internal gear into elliptical shapes and meshes part of the flexible internal gear with the rigid external gear in minor axial directions of the elliptical shapes;
an external gear coupling part that is provided to the rigid external gear and that is capable of coupling with one of the relative rotary members;
an internal gear coupling part that is provided to the flexible internal gear and that is capable of coupling with the other relative rotary member; and
an input coupling part that is provided to the rigid cam and that is capable of coupling with the rotary drive source;
wherein,
rotation of the rigid cam shifts portions at which the flexible internal gear and the rigid external gear mesh in a circumferential direction and differentially moves the flexible internal gear and the rigid external gear.

2. The strain wave reduction gear according to Claim 1, wherein
the internal gear coupling part is configured by:
configuring the flexible internal gear by providing a cylindrically shaped flexible sleeve and providing a plurality of internal teeth to an inner circumferential surface of the flexible sleeve on one end side; and
providing a flange wall or a bottom wall to the other end side of the flexible sleeve and forming a mounting hole therethrough.

3. A strain wave reduction gear that is mounted between one pair of relative rotary members and that receives input rotation from a rotary drive source and converts it into reduced-speed relative rotation between the pair of relative rotary members, the strain wave reduction gear comprising:
a rigid external gear;
a rigid sub external gear that is disposed coaxially and adjacent to the rigid external gear and that has a tooth count that is different from that of the rigid external gear;
a flexible internal gear that surrounds an outer side of the rigid external gear and the rigid sub external gear and comprises internal teeth that have a tooth count that is different from that of external teeth of the rigid external gear;
a flexible bearing that mates with an outer side of the flexible internal gear;
a rigid cam that has at its center part an elliptical hole, an inner side of which mates with the flexible bearing, and that deforms the flexible bearing and the flexible internal gear into elliptical shapes and meshes part of the flexible internal gear with the rigid external gear in minor axial directions of the elliptical shapes;
an external gear coupling part that is provided to the rigid external gear and that is capable of coupling with one of the relative rotary members;
a sub external gear coupling part that is provided to the rigid sub external gear and that is capable of coupling with the other relative rotary member; and
an input coupling part that is provided to the rigid cam and that is capable of coupling with the rotary drive source;
wherein,
rotation of the rigid cam shifts portions at which the flexible internal gear meshes with the rigid external gear and the rigid sub external gear in a circumferential direction and differentially moves the rigid external gear and the rigid sub external gear.

4. The strain wave reduction gear according to any one claim of Claim 1 through Claim 3, wherein
an outer edge of the rigid cam has a circular shape, and a plurality of external teeth, which serve as the input coupling part, are formed on an outer circumferential surface of the rigid cam; and
the rigid cam is capable of coupling with the rotary drive source by gearing via a drive force transmitting gear, which rotates around a rotary shaft that is offset from a rotary shaft of the rigid cam.

5. A variable transmission ratio steering apparatus, comprising:
a rack and pinion mechanism that is provided by meshing a pinion with a rack between one pair of turning wheels of a vehicle;
the strain wave reduction gear according to Claim 3;
the rigid cam according Claim4; and
a motor, which serves as a rotary drive source;
wherein,
one of the rigid external gear and the rigid sub external gear is coupled to a steering wheel of the vehicle and the other of the rigid external gear and the rigid sub external gear is coupled to the pinion; and
transmission ratio of a steering angle from the steering wheel to the pinion can be varied in accordance with vehicle speed.
